# EUROPÄISCHE PATENTANMELDUNG

(11) **EP 2 604 485 A2**
(43) Veröffentlichungstag der Anmeldung: **19.06.2013**
(21) Anmeldenummer: 12007894.4
(22) Anmeldetag: 23.11.2012
(51) Int. Cl.: B60W 30/12

(54) **Verfahren zur Seitenwindstabilisierung eines Kraftfahrzeugs**

(30) Priorität: 14.12.2011 DE 102011121117
(71) Anmelder: AUDI AG, 85045 Ingolstadt (DE)
(72) Erfinder: Bär, Michael, 85049 Ingolstadt (DE); Wegscheider, Michael, 85139 Wettstetten (DE)
(74) Vertreter: Thielmann, Frank

(57) **Zusammenfassung**

Verfahren zur Seitenwindstabilisierung eines Kraftfahrzeug umfassend Vorder- und Hinterräder, wobei die Vorder- und/oder die Hinterräder über ein aktiv ansteuerbares Differential mit variierbarer Momentenverteilung angetrieben werden, sowie einer Einrichtung zur Erfassung einer Seitenablage, wobei über das Differential bei Erfassung einer Seitenablage durch Verändern der Momentenverteilung ein der Seitenablage entgegenwirkendes Giermoment erzeugt wird.

## Beschreibung

Die Erfindung betrifft ein Verfahren zur Seitenwindstabilisierung eines Kraftfahrzeugs umfassend Vorder- und Hinterräder, wobei die Forder- und/oder die Hinterräder über ein aktiv ansteuerbares Differential mit einem Überlagerungsgetriebe zur variablen Momentenverteilung zu beiden Abtriebsseiten angetrieben werden, sowie eine Einrichtung zur Erfassung einer Seitenablage.

Wenngleich Kraftfahrzeuge aufgrund moderner Fahrwerkstechnik einen äußerst stabilen Geradeauslauf aufweisen, kann es mitunter bei starkem Seitenwind zu einem Driftvorgang kommen, d. h., dass das Fahrzeug seitenwindbedingt von der geraden Fahrlinie zur Seite hin driftet. Diese Spurerweichung wird Seitenablage genannt. Derartige Seitenwinde sind häufig bei freiliegenden Fahrstrecken, auf Brücken oder bei Überholvorgängen insbesondere von LKWs gegeben.

Moderne Fahrzeuge verfügen über eine Einrichtung zur Erfassung einer Seitenablage, die es ermöglicht, eine etwaige Abweichung von einer durch den Lenkwinkel definierten Fahrspur qualitativ und quantitativ zu erfassen. Damit kann auch eine seitenwindbedingte Seitenablage ermittelt werden. Um das Fahrzeug in einem solchen Fall zu stabilisieren ist es bekannt, ein Giermoment über einen Lenk- oder Bremseingriff zu erzeugen, mithin also das Fahrzeug über einen solchen Lenk- oder Bremseingriff wieder zurückzuführen. Auch ist es alternativ hierzu bekannt, das Fahrwerk zur Giermomenterzeugung zu verspannen. Die bekannten Stabilisierungsmöglichkeiten sind jedoch in der Fahrzeugreaktion teilweise träge, d. h., dass die Stabilisierung langsam respektive verzögert erfolgt. Trotz Korrektur respektive trotz Eingriffs entsteht eine seitliche Ablage.

Der Erfindung liegt damit das Problem zugrunde, ein Verfahren zur Seitenwindstabilisierung anzugeben, das eine schnelle und weitgehende Korrektur einer Seitenwindablage ermöglicht.

Zur Lösung dieses Problems ist bei einem Verfahren der eingangs genannten Art erfindungsgemäß vorgesehen, dass über das Differential bei Erfassung einer Seitenablage durch Verändern der Momentenverteilung ein der Seitenablage entgegenwirkendes Giermoment erzeugt wird.

Das erfindungsgemäße Verfahren sieht zur Seitenwindstabilisierung eine Veränderung der Momentenverteilung an den angetriebenen Rändern vor. Eine solche Variation der Momentenverteilung ist über ein aktiv ansteuerbares Differential, oft auch Achsgetriebe genannt, ohne Weiteres und in weiten Bereichen möglich. Eine differentialbedingte Variation der Momentverteilung wird häufig auch "torque vectoring" genannt. Es handelt sich hierbei um eine gezielte Verteilung von Antriebsmomenten, worüber es möglich ist, die Fahrdynamik und die Fahrsicherheit zu verbessern. Hierzu dient ein stufenlos wirkendes Differential, wie es beispielsweise aus DE 10 2009 013 294 A1 bekannt ist.

Wird nun über eine geeignete Erfassungseinrichtung eine Seitenablage respektive der Beginn eines Seitenwärtsdriftens erfasst, so kann sofort über das Differential eine Veränderung der Verteilung der Antriebsmomente erfolgen, so dass sich folglich ein aktives Giermoment aufbaut, das dem Seitwärtsdriften entgegenwirkt. Das Sperrdifferential wird folglich zur erfindungsgemäßen Seitenwindstabilisierung nicht gesperrt, sondern aktiv angesteuert, um die Momentenverteilung in einer Weise vorzunehmen, dass sich ein Gegengiermoment ergibt, über das das Fahrzeug wieder zurückgeführt respektive eine sich anbahnende Seitenablage unmittelbar korrigiert wird. D. h., dass ein aktiv ansteuerbares Differential, also ein solches Sperrdifferential, wie es beispielsweise aus DE 10 2009 013 294 A1 bekannt ist, bei plötzlich auftretendem Seitenwind gerade nicht gesperrt wird (wie es aus DE 10 2009 013 294 A1 bekannt ist), vielmehr wird das Differential als aktives Korrekturelement zur Seitenwindstabilisierung verwendet und aktiv zur Momentenvariation angesteuert.

D. h., dass erfindungsgemäß dem Differential eine weitere Funktion zukommt, nämlich die eines Seitenwindstabilisierungselements. Hierüber kann auf einfache Weise ein Seitenwindassistenzsystem realisiert werden, etwaige Bauelemente zur Realisierung einer elektronischen Lenkung zur Gabe eines Giermoments über einen Lenkeingriff sind folglich nicht erforderlich.

Die Seitenablage kann auf unterschiedliche Weise erfasst werden. Gemäß einer ersten Erfindungsalternative kann die Seitenablage mittels eines Giersensors erfasst werden. Ein solcher Giersensor ist häufig ohnehin bereits fahrzeugseitig verbaut, beispielsweise als Teil eines ESP-Systems (ESP = Elektronisches Stabilitätsprogramm). Der Giersensor erfasst eine Rotationsbewegung um die Vertikalachse, woraus die Seitenablage bestimmt werden kann im Vergleich zur Vorgabe durch das Lenkrad.

Alternativ oder zusätzlich kann die Seitenablage auch anhand der Drehzahl der Fahrzeugräder erfasst werden. Weicht das Fahrzeug z. B. von einer Geradeausfahrlinie ab, fährt es also quasi eine Kurve mit extrem großen Radius, so stellt sich gleichwohl eine geringe Drehzahldifferenz an den kurvenäußeren und kurveninneren Rädern ein. Auch hieraus kann eine etwaige Seitenablage ermittelt werden. Diese Art der Seitenablagenerfassung kann alternativ oder zusätzlich zur Gierratenerfassung erfolgen, auch können die beiden unterschiedlichen Erfassungsmöglichkeiten zu Plausibilitätszwecken miteinander verglichen respektive kombiniert werden.

Eine dritte, ebenfalls alternative oder zusätzliche Möglichkeit zur Seitenablagenerfassung sieht vor, diese anhand das Fahrzeugvorfeld zeigender und mittels einer Kamera aufgenommener Kamerabilder zu bestimmen. Moderne Kraftfahrzeuge weisen häufig Fahrerassistenzsysteme auf, die eine Kamera umfassen, die das Fahrzeugvorfeld aufnimmt. Im Fahrzeugvorfeld sind üblicherweise Fahrspurmarkierungen oder sonstige bauliche oder umgebungsmäßige Gegebenheiten vorhanden, die, insbesondere in Verbindung mit dem bekannten Lenkwinkel, der über das Lenkrad eingeschlagen ist, die Erfassung einer Seitenablage ermöglichen. Auch anderweitige Erfassungsmittel z.B. in Form vor Radarsensoren oder Laser sind vernwedbar.

Alle Informationen, die eine etwaige Seitenablage beschreiben, laufen in einem Steuergerät zusammen, respektive werden gegebenenfalls bereits in diesem erfasst, das auch die Steuerung des Differentials vornimmt. Das Steuergerät ermittelt entsprechende Steuersignale, die die Veränderung der Momentenverteilung beschreiben, um der erfassten Seitenablage schnell und unmittelbar entgegenwirken und diese korrigieren zu können. Die Veränderung der Momentenverteilung kann dabei in Abhängigkeit der kontinuierlich ermittelten Seitenablage erfolgen, d. h., dass eine dauerhafte Ablagenerfassung erfolgt wird, mithin also auch kontinuierlich überprüft wird, wie der Korrekturerfolg ist. Es erfolgt also eine Regelung der Momentenverteilung.

Alternativ zu einer kontinuierlichen Erfassung und einer Regelung in unmittelbarer Abhängigkeit der erfassten Seitenablage ist es denkbar, bei einer erforderlichen Änderung der Momentenverteilung zunächst eine vorbestimmte Momentenänderung vorzunehmen, die bedarfsabhängig nachgeregelt werden kann. Hier ist also bei Erfassung einer Momentenverteilung zunächst eine unmittelbare Basisänderung definierter Größe vorgesehen, wobei nach Vornahme dieser Änderung überprüft wird, wie der Korrekturerfolg ist. Ist dieser hinreichend, wird keine weitere Änderung mehr vorgenommen. Ist dieser nicht hinreichend, wird situationsabhängig eine Nachregelung vorgenommen. Beispielsweise kann eine Basisregelung z. B. die Gabe eines zusätzlichen Moments von 100 Nm an einem Rad respektive an zwei an einer Seite befindlichen Rädern vorsehen, welche Änderung je nach Korrekturerfolg ihrerseits nochmals korrigiert werden kann.

Neben dem Verfahren betrifft die Erfindung ferner ein Kraftfahrzeug umfassend Vorder- und Hinterräder, wobei die Vorder- und/oder die Hinterräder über ein über eine Steuerungseinrichtung aktiv ansteuerbares Differential mit variierbarer Momentenverteilung angetrieben werden, sowie eine Einrichtung zur Erfassung einer Seitenablage. Das erfindungsgemäße Kraftfahrzeug zeichnet sich dadurch aus, dass bei Erfassung einer Seitenablage über das Differential durch Verändern der Momentenverteilung ein der Seitenablage entgegenwirkendes Giermoment erzeugbar ist. D. h., dass die Einrichtung zur Seitenablagenerfassung, die einen Drift aufgrund gegebenen Seitenwinds erfasst, mit der Steuereinrichtung des Differential kommuniziert, so dass unmittelbar auf eine etwaige sich einstellende Seitenablage durch Differentialeingriff reagiert werden kann.

Die Erfassungseinrichtung kann ein Giersensor sein bzw. kann einen solche umfassen. Über den Giersensor wird folglich eine Gierrate, also eine Drehung um die Hochachse im Vergleich zur Wunschtrajektorie erfasst.

Alternativ oder zusätzlich kann die Erfassungseinrichtung zur Erfassung einer Seitenablage anhand der Drehzahlen der Fahrzeugräder ausgebildet sein. Bei modernen Kraftfahrzeugen ist ohnehin eine Drehzahlerfassung der Räder, zumindest der angetriebenen Räder, vorgesehen, diese Parameter werden beispielsweise im Rahmen von ESP-Systemen oder zur Ermittlung der Fahrgeschwindigkeit benötigt. Eben diese Parameter werden nun beim erfindungsgemäßen Kraftfahrzeug aber auch zur Erfassung einer etwaigen Seitenablage herangezogen.

Schließlich kann, gegebenenfalls zusätzlich, die Erfassungseinrichtung auch eine Kamera sein respektive umfassen, wobei die Kamerabilder das Fahrzeugvorfeld zeigen und eine Seitenablage durch Auswertung der Kamerabilder erfasst wird.

Die Steuerungseinrichtung ist dabei gemäß einer ersten Alternative in Abhängigkeit der kontinuierlichen Seitenablagenerfassung zur kontinuierlichen Veränderung der Momentenverteilung ausgebildet. Hier ist also eine Momentenregelung vorgesehen, die abhängig von der tatsächlichen erfassten Seitenablage ein unmittelbar entsprechend ausgelegtes Korrekturmoment anlegt.

Alternativ hierzu kann die Steuerungseinrichtung bei einer erforderlichen Änderung der Momentenverteilung zunächst zur Veränderung des Moments um ein vorbestimmtes, stets gleiches Maß und zu einer bedarfsabhängigen Nachregelung ausgebildet sein. Hier ist also quasi eine zwei-stufige Momentenvariation vorgesehen, nämlich zunächst eine Variation um ein Basismoment, wenn grundsätzlich eine Seitenablage erfasst wird, um unmittelbar reagieren zu können. Der Korrekturerfolg wird überprüft, wobei abhängig vom Korrekturerfolg eine bedarfsabhängige Nachregelung möglich ist.

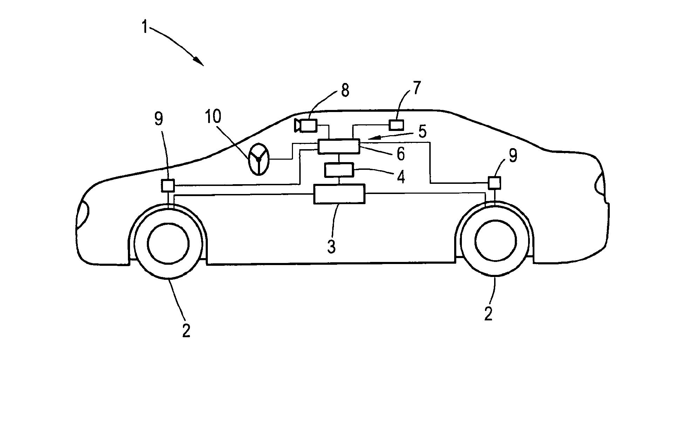

Weitere Vorteile, Merkmale und Einzelheiten der Erfindung ergeben sich aus dem im Folgenden beschriebenen Ausführungsbeispiel sowie anhand der Zeichnung.

Die Figur zeigt ein erfindungsgemäßes Kraftfahrzeug 1, umfassend insgesamt vier Räder 2, die allesamt angetrieben sein können. Vorgesehen ist ein Differential 3 mit Überlagerungsgetriebe an der Vorderachse oder der Hinterachse mit zugeordneter Steuerungseinrichtung 4 (denkbar ist auch, dass jede Achse über ein eigenes Differential verfügt, also jede Achse angetrieben wird). Das Differential 3 (häufig auch Achsgetriebe genannt) ist hier aus Gründen der Darstellbarkeit mittig gezeigt, tatsächlich handelt es sich um ein Achsgetriebe, das natürlich in der jeweils angetriebenen Achse, sei es die Vorderachse, sei es die Hinterachse, angeordnet ist. Das Differential 3 ist ein Achsdifferential mit Überlagerungsgetriebe, das eine veränderbare Verteilung der Antriebsmomente, die über das nicht näher gezeigte Antriebsaggregat auf die einzelnen von ihm angetriebenen Räder 2 gegeben werden, ermöglicht.

Vorgesehen ist ferner eine Einrichtung 5 zur Erfassung einer Seitenwindablage, die als Fahrerassistenzsystem einen Seitenwindassistenten bildet. Über dieses System ist es möglich, bei Erfassung einer aus einem auf das Fahrzeug wirkenden Seitenwind resultierenden Seitenablage eine Korrektur über das Differential 3 vorzunehmen.

Hierzu umfasst die Einrichtung 5 zum einen eine Steuerungseinrichtung 6, die der Ermittlung einer etwaigen Seitenablage sowie eines zur Korrektur aufzubringenden respektive über das Differential 3 anzusteuernden Giermoment vornimmt.

Zur Erfassung der etwaigen Seitenablage kommuniziert die Steuerungseinrichtung 6 im gezeigten Ausführungsbeispiel mit einem Giersensor 7, der eine etwaige Rotationsbewegung um die Vertikalachse des Kraftfahrzeugs 1 erfasst. Ferner ist dargestellt, dass eine Kamera 8 mit der Steuerungseinrichtung 6 kommuniziert. Die Kamera 8 erfasst das Fahrzeugvorfeld, liefert also kontinuierlich Bilder, die seitens der Steuerungseinrichtung 6 zur Erfassung einer etwaigen Seitendrift ausgewertet werden können. Auch hierüber kann eine etwaige Seitenablage erfasst werden. Der Gierratensensor 7 und die Kamera 8 können alternativ vorgesehen werden, aber auch kumulativ, so dass eine etwaige Plausibilitätsprüfung der jeweils gelieferten Informationen möglich ist.

Ferner kommuniziert die Steuerungseinrichtung 6 mit Drehzahlsensoren 9, die den einzelnen Rädern zugeordnet sind. Im Fall einer Seitenablage kann es zu Drehzahlunterschieden an der Räder an den unterschiedlichen Seiten kommen. Auch diese alternative oder gegebenenfalls zu Plausibilisationszwecken zusätzliche Auswertung kann Informationen über eine etwaige sich einstellende Seitenablage liefern.

Ferner vorgesehen ist ein Lenkrad 10, über das vom Fahrer der Lenkwinkel eingestellt wird, mithin also der Winkel, der die Wunschtrajektorie definiert. Die Steuerungseinrichtung 6 kommuniziert mit dem Lenkrad 10 respektive einem dortigen Winkelsensor, so dass seitens der Steuerungseinrichtung 6 stets die gewünschte Fahrspur, die der Fahrer befahren möchte, die aber aufgrund des wirkenden Seitenwinde nicht real befahren wird respektive der das Fahrzeug nicht folgt, bekannt ist.

Anhand all dieser Informationen nimmt die Steuerungseinrichtung 6 nun eine Ermittlung der Eigenbewegung vor, sie ermittelt also, wie also die reale Bewegung respektive Bewegungsrichtung ist, und vergleicht diese mit dem "Wunschverhalten", also der sich aus dem eingestellten Lenkwinkel ergebenden Fahrspur oder Fahrrichtung, der der Fahrer tatsächlich folgen möchte. Ergibt sich hieraus, dass eine Differenz gegeben ist, mithin also ein etwaiger Seitenversatz eintritt respektive gegeben ist, so ermittelt die Steuerungseinrichtung 6 umgehend ein korrigierendes Giermoment, das über das Differential 3 zu erzeugen ist, mithin also eine Steuerinformation, wie das Differential 3 die Momentenverteilung zur Erzeugung eines korrigierenden Giermoments vorzunehmen hat. Die Steuerungseinrichtung 6 kommuniziert hierzu mit der Steuerungseinrichtung 4, die wiederum die Steuerung des Differentials 3 vornimmt. Das Differential 3 verändert nun umgehend die Momentenverteilung zwischen den angetriebenen Rädern, d. h., dass das Rad/die Räder einer Seite ein größeres Antriebsmoment als das/die der anderen Seite erfahren, um das Fahrzeug in die entgegengesetzte Richtung zu gieren, mithin also korrigierende auf die Spurabweichung zu reagieren.

Dabei kann die konkrete Ausgestaltung derart sein, dass umgehend mit Erfassung einer etwaigen Seitenablage das Differential eine Basiskorrektur vornimmt, mithin also ein korrigierendes, vorbestimmtes Giermoment der einen oder anderen Radseite erteilt. Da die Steuerungseinrichtung 6 kontinuierlich eine etwaige Seitenablage ermittelt, kann unmittelbar nach Gabe des Basisgiermoments der Erfolg überprüft werden, wie sich also das Fahrzeug hierauf verhält. Reicht das korrigierend gegebene Basiskorrekturmoment aus, die Seitenablage zu korrigieren, so erfolgt keine Nachregelung, reicht das Korrekturmoment nicht aus, so wird durch erneute Variation der Momentenverteilung nachgeregelt.

Die entsprechenden grundsätzlichen Regelparameter können beispielsweise in geeigneten Tabellenform unter Bezugnahme auf die konkrete Ist-Ablage abgelegt sein, aus welcher Tabellen die Steuerungseinrichtung 6 dann in Abhängigkeit der konkret erfassten Ist-Ablage das jeweils erforderliche Korrekturmoment wählt. Alternativ kann diese Tabelle auch in der Steuerungseinrichtung 4 abgelegt sein. Auch kann die Bestimmung des anzulegenden Korrekturmoments durch eine Modellierung erfolgen, indem unter Verwendung eines entsprechenden Fahrzeugmodels in Verbindung mit den Informationen zur Ist-Ablage und gegebenenfalls weiteren Parametern die Wirkung verschiedener Korrekturmomente modelliert wird, woraus sodann das konkret anzulegende Korrekturmoment gewählt wird.

## Patentansprüche

1. Verfahren zur Seitenwindstabilisierung eines Kraftfahrzeug, umfassend eine Einrichtung zur Erfassung einer Seitenablage und Vorder- und Hinterräder, **dadurch gekennzeichnet,**
**dass** die Vorder- und/oder die Hinterräder über ein aktiv ansteuerbares Differential mit Überlagerungsgetriebe zur variablen Momentenverteilung zu beiden Abtriebsseiten angetrieben werden und über das Differential bei Erfassung einer Seitenablage durch Verändern der Momentenverteilung ein der Seitenablage entgegenwirkendes Giermoment erzeugt wird.

2. Verfahren nach Anspruch 1,
**dadurch gekennzeichnet,**
**dass** die Seitenablage mittels eines Giersensors erfasst wird.

3. Verfahren nach Anspruch 1 oder 2,
**dadurch gekennzeichnet,**
**dass** die Seitenablage, gegebenenfalls zusätzlich, anhand der Drehzahlen der Fahrzeugräder erfasst wird.

4. Verfahren nach einem der vorangehenden Ansprüche,
**dadurch gekennzeichnet,**
**dass** die Seitenablage, gegebenenfalls zusätzlich, anhand von das Fahrzeugvorfeld zeigender und mittels einer Kamera aufgenommener Kamerabilder oder mittels Radar oder Laser erfasst wird.

5. Verfahren nach einem der vorangehenden Ansprüche,
**dadurch gekennzeichnet,**
**dass** die Veränderung der Momentenverteilung in Abhängigkeit der kontinuierlich ermittelten Seitenablage erfolgt.

6. Verfahren nach einem der Ansprüche 1 bis 4,
**dadurch gekennzeichnet,**
**dass** bei einer erforderlichen Änderung der Momentenverteilung zunächst eine vorbestimmte Momentenänderung erfolgt, die bedarfsabhängig nachgeregelt wird.

7. Kraftfahrzeug umfassend Vorder- und Hinterräder und eine Einrichtung zur Erfassung einer Seitenablage,
**dadurch gekennzeichnet,**
**dass** die Vorder- und/oder die Hinterräder über ein über eine Steuerungseinrichtung aktiv ansteuerbares Differential mit variierbarer Momentenverteilung angetrieben werden und bei Erfassung einer Seitenablage über das Differential (3) durch Verändern der Momentenverteilung ein der Seitenablage entgegenwirkendes Giermoment erzeugbar ist.

8. Kraftfahrzeug nach Anspruch 7,
**dadurch gekennzeichnet,**
**dass** die Erfassungseinrichtung ein Giersensor (7) ist oder umfasst.

9. Kraftfahrzeug nach Anspruch 7 oder 8,
**dadurch gekennzeichnet,**
**dass** die Erfassungseinrichtung (6), gegebenenfalls zusätzlich, zur Erfassung einer Seitenablage anhand der Drehzahlen der Fahrzeugräder (2) ausgebildet ist.

10. Kraftfahrzeug nach einem der Ansprüche 7 bis 9,
**dadurch gekennzeichnet,**
**dass** die, gegebenenfalls zusätzliche, Erfassungseinrichtung eine Kamera (8) ist oder umfasst, die Kamerabilder des Fahrzeugvorfelds liefert, wobei die Seitenablage, gegebenenfalls zusätzlich, durch Auswertung der Kamerabilder erfasst wird.

11. Kraftfahrzeug nach einem der Ansprüche 7 bis 10,
**dadurch gekennzeichnet,**
**dass** die Steuerungseinrichtung (4) in Abhängigkeit der kontinuierlichen Seitenablageerfassung zur kontinuierlichen Veränderung der Momentenverteilung ausgebildet ist.

12. Kraftfahrzeug nach einem der Ansprüche 7 bis 10,
**dadurch gekennzeichnet,**
**dass** die Steuerungseinrichtung (4) bei einer erforderlichen Änderung der Momentenverteilung zunächst zur Veränderung des Moments um ein vorbestimmtes Maß und zu einer bedarfsabhängigen Nachregelung ausgebildet ist.
